# FASCICULE DE BREVET EUROPEEN

(11) **EP 1 854 383 B1**
(45) Date de publication et mention de la délivrance du brevet: **21.04.2010**
(21) Numéro de dépôt: 07012295.7
(22) Date de dépôt: 26.11.2004
(51) Int. Cl.: A47J 27/09, A47J 27/092

(54) **Appareil de cuisson d'aliments sous pression**
Druckkochgerät zum Zubereiten von Nahrungsmitteln
Food pressure-cooking device

(30) Priorité: 27.11.2003 FR 0313938
(43) Date de publication de la demande: 14.11.2007
(62) Demande divisionnaire de: 04356186.9
(73) Titulaire: SEB S.A., 69132 Ecully Cedex (FR)
(72) Inventeur: Seurat Guiochet, Claire Marie-Aurore, 21490 Bretigny (FR); Anota, Daniel Jean-Marie, 21000 Dijon (FR)
(74) Mandataire: Martin, Didier Roland Valéry

(56) Documents cités:
- EP-A- 0 291 641
- DE-C- 602 190
- DE-C1- 3 343 761
- FR-A- 1 079 347
- FR-A- 2 825 256
- GB-A- 581 045
- US-B1- 6 450 361

## Description

La présente invention se rapporte au domaine technique général des appareils de cuisson sous pression, à usage domestique, tels que des autocuiseurs, comprenant une cuve et un couvercle destiné à être verrouillé sur la cuve pour former une enceinte de cuisson étanche, lesdits appareils étant destinés à assurer la cuisson sous pression de vapeur des aliments contenus dans la cuve.

La présente invention concerne plus particulièrement un appareil de cuisson domestique sous pression comprenant :
- une cuve de cuisson et un couvercle destiné à être rapporté et verrouillé sur ladite cuve pour former une enceinte de cuisson sensiblement étanche,
- un moyen de verrouillage / déverrouillage du couvercle relativement à la cuve,
- un moyen de régulation de pression, agencé pour maintenir la pression relative régnant dans l'enceinte à une valeur prédéterminée sensiblement constante dite pression de fonctionnement,
- un moyen de décompression activable / désactivable, agencé pour autoriser, lorsqu'il est activé, une chute de la pression régnant dans l'enceinte.

Les appareils de cuisson sous pression à usage domestique, du genre autocuiseurs, sont largement connus.

Ils permettent de réaliser une enceinte hermétique au sein de laquelle sont placés les aliments, ladite enceinte pouvant atteindre des pressions et températures élevées lorsque l'appareil est soumis à l'influence d'une source de chauffe.

Les effets conjugués des niveaux élevés de pression et de température atteints dans les autocuiseurs connus permettent de réaliser une cuisson des aliments extrêmement rapide, tout en étant respectueuse des propriétés organoleptiques et nutritionnelles des aliments.

Ces autocuiseurs connus, s'ils donnent généralement tout à fait satisfaction, impliquent cependant de la part de l'utilisateur une manière contraignante de cuisiner.

En effet, la cuisson d'aliments à l'aide d'un appareil du genre autocuiseur est nécessairement réalisée de façon continue, c'est-à-dire que l'utilisateur ne peut plus intervenir directement sur les aliments entre le début et la fin de la cuisson.

En d'autres termes, l'utilisateur n'est pas en mesure, lorsqu'il fait cuire des aliments à l'aide d'un autocuiseur classique, d'ouvrir temporairement, du moins de manière simple et rapide, le couvercle en cours de cuisson, par exemple pour ajouter des ingrédients, goûter les aliments ou plus généralement contrôler directement le déroulement de la cuisson.

Cette impossibilité pour l'utilisateur d'ouvrir le couvercle des autocuiseurs classiques en cours de cuisson, c'est-à-dire alors que l'autocuiseur est toujours soumis à une source de chauffe, provient du niveau élevé de pression régnant à l'intérieur de l'autocuiseur (pression relative comprise généralement entre 55 kPa et 90 kPa). L'ouverture directe du couvercle lorsqu'il est soumis à de tels niveaux de pression pourrait conduire en effet à un échappement brutal du couvercle, éventuellement accompagné de projections brûlantes, ce qui pourrait blesser plus ou moins gravement l'utilisateur.

C'est pourquoi, avant toute ouverture du couvercle d'un autocuiseur classique, il est nécessaire de procéder à une décompression de l'enceinte de cuisson, en arrêtant la source de chauffe et en mettant en communication l'intérieur de l'enceinte avec l'extérieur, par l'intermédiaire de systèmes de soupape prévus à cet effet. Du fait du haut niveau de pression régnant dans l'enceinte, la durée de décompression est cependant généralement très longue (même en plaçant l'appareil sous un jet d'eau froide), et est de ce fait incompatible avec une ouverture temporaire du couvercle en cours de cuisson. De surcroît, ces appareils de cuisson connus sont généralement pourvus de systèmes de sécurité à l'ouverture, qui empêchent l'utilisateur d'ouvrir le couvercle de l'appareil tant que la pression régnant dans l'appareil est supérieure à la pression atmosphérique. L'utilisateur doit donc attendre, pour ouvrir le couvercle, que la pression dans l'enceinte soit sensiblement égale à la pression atmosphérique ; ce temps d'attente est généralement long, et empêche d'utiliser les appareils de cuisson sous pression connus à la manière d'un faitout, c'est-à-dire d'un ustensile permettant une ouverture temporaire rapide du couvercle en cours de cuisson.

On connaît par ailleurs des ustensiles de cuisine comprenant une cuve et un couvercle qui permettent de cuire des aliments sensiblement à la pression atmosphérique, voire à des pressions légèrement supérieures en ce qui concerne certains ustensiles munis d'un système de verrouillage hermétique du couvercle relativement à la cuve ainsi que d'une soupape de régulation.

Ces ustensiles de cuisson à faible pression permettent effectivement, au contraire des autocuiseurs classiques, d'ouvrir directement et à volonté le couvercle pendant le cycle de cuisson sans nécessité de réaliser au préalable une véritable décompression.

Ces ustensiles, s'ils permettent ainsi à l'utilisateur d'ouvrir sensiblement instantanément le couvercle en cours de cuisson, n'offrent en revanche pas les avantages liés à une véritable cuisson sous pression telle que celle pratiquée avec les autocuiseurs classiques, notamment en terme de rapidité de cuisson et de préservation des propriétés des aliments.

Ces ustensiles se comportent en effet plutôt comme des marmites classiques plus ou moins améliorées.

On connaît par ailleurs du document EP-0 291 641 A1 un appareil conforme au préambule de la revendication 1.

L'objet de l'invention vise en conséquence à proposer un nouvel appareil de cuisson domestique sous pression portant remède aux différents inconvénients énumérés précédemment et qui permette un mode de cuisson proche de celui obtenu avec les autocuiseurs classiques de l'art antérieur, tout en autorisant l'ouverture du couvercle de façon relativement facile et rapide à tout moment de la cuisson sans arrêter la source de chauffe, tout en présentant un excellent niveau de sécurité.

Un autre objet de l'invention vise à proposer un nouvel appareil de cuisson domestique sous pression procurant un excellent compromis en termes de rapidité de cuisson et de rapidité de décompression.

Un autre objet de l'invention est de proposer un nouvel appareil de cuisson domestique sous pression qui présente un excellent compromis en termes de rapidité de cuisson, souplesse d'utilisation, et sécurité.

Un autre objet de l'invention vise à proposer un nouvel autocuiseur domestique sous pression qui présente une grande facilité d'utilisation.

Les objets assignés à l'invention sont atteints à l'aide d'un appareil de cuisson domestique sous pression conforme à l'objet de la revendication 1.

D'autres particularités et avantages de l'invention apparaîtront et ressortiront plus en détails à la lecture de la description faite ci-après, en référence aux dessins annexés, donnés à titre purement illustratif et non limitatif, dans lesquels :
- La figure 1 montre, selon une vue générale en perspective, un appareil de cuisson domestique sous pression conforme à l'invention.
- La figure 2 illustre, selon une vue éclatée en perspective, un détail de réalisation du couvercle d'un appareil de cuisson conforme à l'invention.
- La figure 3 illustre, selon une vue en coupe transversale partielle, un détail de réalisation du moyen de sécurité à l'ouverture d'un appareil de cuisson conforme à l'invention, lorsque l'utilisateur vient de procéder au verrouillage étanche du couvercle relativement à la cuve.
- La figure 4 illustre, selon une vue de dessus, l'appareil de cuisson conforme à l'invention dont un détail est représenté à la figure 3.
- La figure 5 illustre, selon une vue partielle en coupe transversale, le détail de réalisation représenté à la figure 3 lorsque l'utilisateur procède à la décompression de l'appareil.
- La figure 6 illustre, selon une vue de dessus, l'appareil de cuisson conforme à l'invention dont un détail est représenté à la figure 5.
- La figure 7 illustre, selon une vue en coupe transversale partielle, le détail de réalisation représenté à la figure 6, lorsque la décompression est achevée.
- La figure 8 illustre, selon une vue de dessus, l'appareil de cuisson conforme à l'invention dont un détail est représenté à la figure 7.
- La figure 9 illustre, selon une vue partielle en coupe transversale, le détail de réalisation représenté à la figure 7 lorsque l'utilisateur procède au déverrouillage du couvercle.
- La figure 10 illustre, selon une vue de dessus, l'appareil de cuisson conforme à l'invention dont un détail est représenté à la figure 9.

L'appareil de cuisson conforme à l'invention est destiné à assurer la cuisson de différents aliments, sous pression, dans un contexte domestique. L'appareil de cuisson visé par l'invention est donc destiné à être utilisé dans un cadre familial, et présente donc un caractère portable, au contraire d'un appareil industriel.

De façon classique, l'appareil de cuisson conforme à l'invention comprend une cuve 1 formant récipient de cuisson et présentant de façon préférentielle sensiblement une symétrie de révolution selon un axe X-X'. Par la suite, l'adjectif « *axial »* se réfèrera à la direction de cet axe de symétrie X-X', direction qui s'apparente à la direction verticale lorsque l'appareil est en fonctionnement normal.

La cuve 1 est de manière classique réalisée à partir d'un matériau métallique tel que l'acier inoxydable, et est pourvue d'un fond thermo-conducteur 1A solidarisé à la cuve 1 par exemple par frappe à chaud.

La cuve 1 peut comporter également des organes de préhension, telles que des poignées 1B, 1C, préférentiellement au nombre de deux, et fixés par exemple sur la cuve 1 de façon diamétralement opposée.

L'appareil comprend également un couvercle 2 destiné à être rapporté sur ladite cuve 1 pour former une enceinte de cuisson sensiblement étanche, c'est-à-dire suffisamment hermétique pour permettre une montée en pression.

Le couvercle 2 est avantageusement de forme générale discoïde, et son diamètre général peut par exemple être de l'ordre de 26 cm, ce qui correspond au standard en vigueur en matière de faitouts.

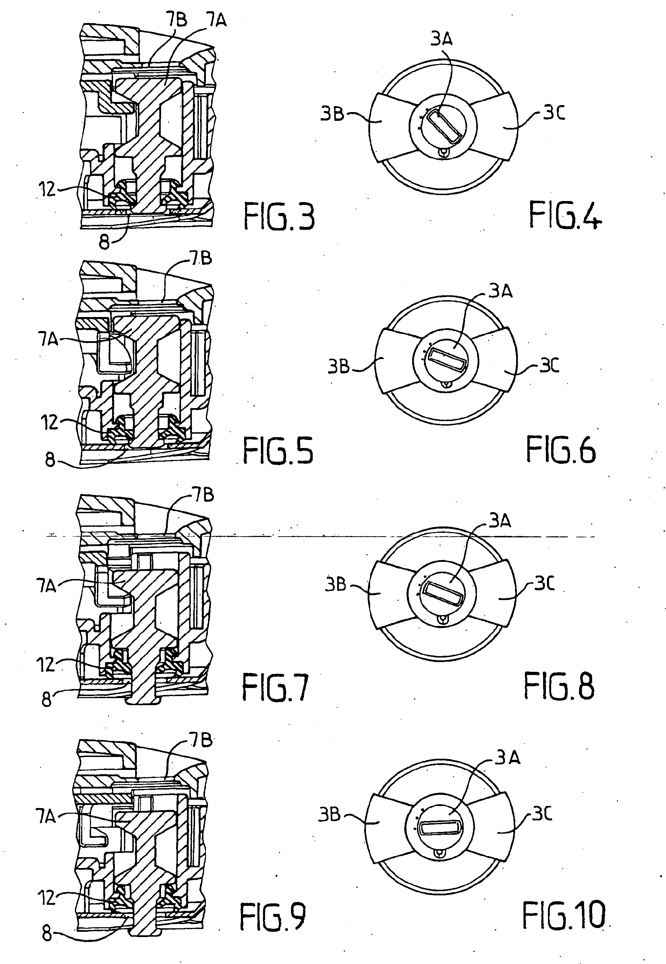

Le couvercle 2 peut être verrouillé (cf. figures 4, 6 et 8) ou déverrouillé (cf. figure 10) sur la cuve 1 grâce à un moyen de verrouillage / déverrouillage 3 du couvercle 2 relativement à la cuve 1.

Le moyen de verrouillage / déverrouillage 3 peut être de tout type connu de l'homme du métier, et en particulier mettre en oeuvre un organe de commande manuel 3A, du genre poignée, relié fonctionnellement à au moins un organe de solidarisation 3B, 3C du couvercle 2 relativement à la cuve 1.

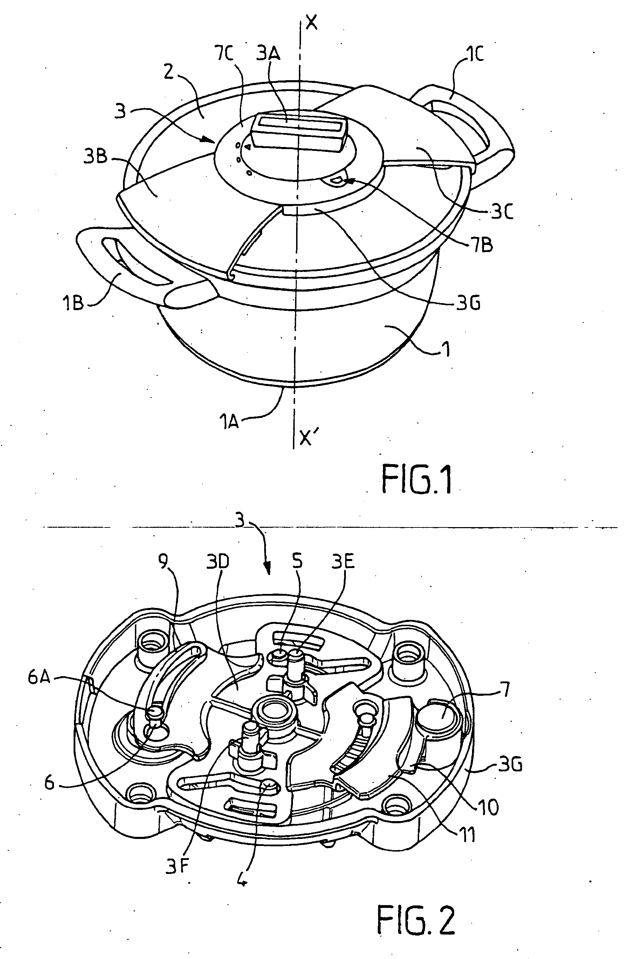

Dans ce qui suit, on fera plus particulièrement référence à un moyen de verrouillage / déverrouillage à mâchoires 3B, 3C commandé par une poignée rotative 3A, tel que cela est représenté à la figure 1.

Les mâchoires 3B, 3C peuvent ainsi se présenter sous la forme de plaques métalliques, profilées en U à leurs extrémités extérieures, de façon à pouvoir enserrer à la fois le rebord périphérique de la cuve 1 et le rebord périphérique du couvercle 2.

Les mâchoires pourront avantageusement, tel que cela est illustré aux figures, être au nombre de deux, et positionnées de manière diamétralement opposée en regard de l'axe de symétrie général X-X' de l'appareil.

Le déplacement radial des mâchoires entre leur position de verrouillage et leur position de déverrouillage est avantageusement commandé par une plaque intermédiaire rotative 3D dont la rotation est commandée directement par la poignée rotative 3A, ladite plaque intermédiaire 3D agissant sur les mâchoires 3B, 3C en entraînant en translation des ergots de guidage 4, 5 associés aux mâchoires 3B, 3C (cf. figure 2).

La poignée 3A est solidarisée à la plaque intermédiaire 3D par l'intermédiaire de quilles de fixation 3E, 3F. L'ensemble formé par la plaque 3D et la poignée 3A est monté en rotation sur un siège 3G, qui est lui même rapporté sur le couvercle 2.

Le moyen de verrouillage / déverrouillage 3 du couvercle 2 relativement à la cuve 1 n'est cependant pas limité à un système à mâchoires, et peut par exemple reposer sur un principe de verrouillage à baïonnettes, à segments, à étriers ou selon tout autre moyen bien connu de l'homme du métier, sans pour autant que l'on sorte du cadre de l'invention.

L'appareil de cuisson domestique conforme à l'invention comprend également un moyen de régulation de pression 6, agencé pour maintenir la pression relative (c'est-à-dire la pression mesurée au-dessus de la pression atmosphérique) régnant dans l'enceinte à une valeur prédéterminée sensiblement constante dite pression de fonctionnement P_{f}.

Le principe de fonctionnement général d'un tel moyen de régulation 6 est bien connu de l'homme du métier.

Ainsi, de façon classique, le moyen de régulation de pression 6 est sensible à la pression régnant dans l'enceinte de cuisson et peut être monté mobile entre une première position stable de butée et de rappel, dans laquelle il ferme la communication de l'enceinte vers l'extérieur de l'appareil tant que la pression interne au sein de l'enceinte est sensiblement inférieure ou égale à la pression prédéterminée de fonctionnement P_{f}, et une (ou plusieurs) position(s) de fuite dans laquelle il met en communication l'intérieur de l'enceinte avec l'extérieur de l'appareil dès que la pression à l'intérieur de l'enceinte dépasse la pression prédéterminée de fonctionnement P_{f}.

Un tel moyen de régulation de pression 6 vise ainsi à obtenir un maintien de la pression au sein de l'enceinte aux alentours d'un niveau nominal prédéterminé P_{f}, lorsque l'appareil a quitté son régime transitoire de montée en pression et a atteint son régime stationnaire de fonctionnement.

Le moyen de régulation de pression 6 pourra être classiquement constitué par une soupape à poids ou à ressort de compression, montée mobile dans un puits entre une position basse d'étanchéité et une ou plusieurs position(s) haute(s) de fuite.

Tel que cela est bien connu de l'homme du métier, le moyen de régulation de pression 6 peut également être pourvu d'un système de tarage permettant à l'utilisateur de sélectionner une valeur de pression de cuisson prédéterminée P_{f} parmi un choix de plusieurs niveaux de pression de fonctionnement, via un organe de sélection de pression, en fonction par exemple de la nature des aliments présents dans l'appareil de cuisson.

Conformément à l'invention, l'appareil de cuisson comprend également un moyen de décompression activable / désactivable 6, agencé pour autoriser, lorsqu'il est activé, une chute de la pression régnant dans l'enceinte.

Les fonctions du moyen de décompression activable / désactivable 6 de l'appareil de cuisson conforme à l'invention sont donc notamment les suivantes :
- lorsque le moyen de décompression est désactivé, le moyen de décompression n'autorise sensiblement aucune fuite de vapeur de l'intérieur de l'enceinte vers l'extérieur ;
- lorsque le moyen de décompression est activé, il met en communication l'intérieur de l'enceinte avec l'extérieur, de façon à créer une fuite de vapeur engendrant une diminution de la pression régnant à l'intérieur de l'enceinte, ladite pression évoluant d'une première valeur correspondant à la pression de fonctionnement P_{f} à une deuxième valeur moins élevée, compatible avec le déverrouillage du couvercle dans des conditions de sécurité acceptables pour l'utilisateur.

Le moyen de décompression 6 est préférentiellement conçu pour pouvoir être activé quel que soit le niveau de pression régnant dans l'enceinte, et en particulier pour pouvoir être activé lorsque la pression régnant dans l'enceinte est sensiblement égale à la pression de fonctionnement P_{f}.

Le moyen de décompression pourra consister en tout moyen classique connu de l'homme du métier. Le moyen de décompression sera en particulier conformé et dimensionné de manière à permettre une décompression sans projection dangereuse de matières de cuisson (aliments, liquides de cuisson) brûlantes vers l'extérieur.

Avantageusement, les fonctions du moyen de décompression pourront être réalisées par le moyen de régulation de pression 6, qui présente dans ce cas un caractère bi-fonctionnel.

A cette fin, le moyen de régulation 6 comprend avantageusement un moyen d'engagement activable 6A, se présentant par exemple sous la forme d'une tête d'actionnement. Ce moyen d'engagement activable 6 permet, lorsqu'il est activé, de placer le moyen de régulation en position de fuite, de sorte que ledit moyen de régulation 6 forme également moyen de décompression activable.

L'activation du moyen de décompression, c'est-à-dire en l'occurrence du moyen d'engagement 6A (cf. figure 2), pourra être réalisée directement par l'utilisateur, par exemple manuellement, ou indirectement, à l'aide d'un organe manuel de commande 3A pilotant le déplacement d'une rampe 9 agencée pour régir le déplacement du moyen d'engagement 6A.

Selon une caractéristique importante de l'invention, le moyen de régulation de pression 6 est conçu et adapté à l'appareil de cuisson pour que la pression de fonctionnement P_{f} soit comprise dans une plage s'étendant sensiblement entre 4,5 et 30 kPa, et plus préférentiellement entre 10 et 30 kPa.

Le moyen de régulation 6 est en particulier conçu et dimensionné pour réguler une pression prise dans la plage 4,5-30 kPa, ou 10-30 kPa, quelle que soit la puissance de chauffe à laquelle est soumise l'appareil.

Le moyen de régulation 6 est ainsi agencé pour remplir sa fonction indépendamment de la variabilité des sources de chauffe présentes sur le marché.

Le demandeur a en effet établi que la sélection d'une pression de fonctionnement P_{f} dans la plage 4,5-30 kPa, ou plus préférentiellement dans la plage 10-30 kPa, permet un excellent compromis entre d'une part la durée de cuisson et d'autre part la durée de décompression de l'appareil lorsque l'on veut passer de la pression de fonctionnement P_{f} à une pression moindre compatible avec une ouverture du couvercle dans des conditions acceptables de sécurité pour l'utilisateur.

Il s'avère en effet qu'une pression de fonctionnement P_{f} prise dans les plages précitées autorise un temps de décompression suffisamment court pour être compatible avec une ouverture temporaire du couvercle pendant la cuisson, par exemple pour assaisonner ou goûter les aliments présents dans l'enceinte, et ce sans occasionner de projections brûlantes pendant la décompression, alors même que l'appareil est soumis à une puissance de chauffe constante.

La plage de pression précitée permet ainsi de bénéficier des avantages, en terme de souplesse d'utilisation, d'un faitout classique, ainsi que des avantages d'une cuisson sous pression, puisque, même si la plage 4,5-30 kPa est nettement inférieure à la plage classique 55-90 kPa, le niveau de pression de fonctionnement P_{f} déterminé par le demandeur dans le cadre de la présente invention autorise un gain de temps significatif par rapport aux marmites de cuisson classiques fonctionnant à des pressions voisines de la pression atmosphérique.

En conséquence, le dispositif de cuisson sous pression conforme à l'invention autorise d'une part une véritable cuisson sous pression, et d'autre part permet une décompression sécuritaire suffisamment rapide pour permettre à l'utilisateur d'ouvrir le couvercle à volonté durant la cuisson sans ôter l'appareil du feu de cuisson, ni modifier (par exemple diminuer) la puissance de ce dernier.

De façon préférentielle, la pression de fonctionnement P_{f} de l'appareil conforme à l'invention pourra être comprise entre 5 et 30 kPa, les plages 5-10 kPa, 10-15 kPa, 15-20 kPa, 20-25 kPa et 25-30 kPa donnant par ailleurs individuellement des résultats tout à fait intéressants.

De façon particulièrement avantageuse, la pression de fonctionnement P_{f} est sensiblement égale à 20 kPa.

Le demandeur a ainsi établi que, pour une pression de fonctionnement sensiblement égale à 20 kPa, qui permet d'atteindre des températures à l'intérieur de l'enceinte de l'ordre de 105°C, le gain en terme de temps de cuisson obtenu avec l'appareil conforme à l'invention relativement à un faitout classique était de l'ordre de :
- 25 % pour la cuisson d'un rôti de porc,
- 33 % pour la cuisson de carottes à l'eau,
- 22 % pour la cuisson de saumon à la vapeur.

De plus, il est possible, avec un appareil conforme à l'invention et dont la pression de fonctionnement P_{f} est sensiblement égale à 20 kPa, d'obtenir un temps de décompression d'environ cinq secondes (temps qui correspond au temps nécessaire pour que la pression régnant dans l'enceinte chute de sa valeur de fonctionnement à une valeur compatible avec une ouverture sécurisée du couvercle) dans les conditions suivantes :
- l'appareil contient un litre d'eau,
- l'appareil est soumis à une source de chauffe de type induction, de puissance sensiblement égale à 450 W,
- l'appareil est soumis en permanence à l'influence de la source de chauffe, même pendant l'opération de décompression.

L'appareil de cuisson domestique sous pression conforme à l'invention comprend également un moyen de sécurité à l'ouverture 7 sensible à la pression et/ou à la température régnant dans l'enceinte.

Avantageusement, le moyen de sécurité à l'ouverture 7 est conçu pour interagir avec le moyen de verrouillage/déverrouillage 3, de façon à interdire le déverrouillage du couvercle 2 relativement à la cuve 1 lorsque la pression régnant dans l'enceinte est supérieure à une valeur prédéterminée et/ou lorsque la température à l'intérieur de l'enceinte est supérieure à une valeur prédéterminée.

De façon préférentielle, le moyen de sécurité à l'ouverture 7 comprend une tige manométrique 7A, sensible à la pression régnant dans l'enceinte, et montée mobile en regard d'un perçage 8 ménagé dans le couvercle 2, entre une position basse (représentée aux figures 7 et 9), dans laquelle la tige 7A autorise le verrouillage ou le déverrouillage du couvercle 2 relativement à la cuve 1, et une position haute (représentée aux figures 2, 3 et 5), dans laquelle la tige 7A coopère avec le moyen de verrouillage / déverrouillage 3 pour empêcher le déverrouillage du couvercle 2 relativement à la cuve 1.

Un tel moyen de sécurité à l'ouverture est bien connu dans son principe général. Il permet une sécurité positive à l'ouverture, en autorisant la désolidarisation du couvercle 2 relativement à la cuve 1 uniquement lorsque le niveau de pression régnant dans l'enceinte atteint un niveau acceptable du point de vue de la sécurité de l'utilisateur.

De façon avantageuse, le moyen de sécurité à l'ouverture 7, comprenant par exemple une tige manométrique 7A, est conçu pour être maintenu en position haute sous l'effet de la pression régnant dans l'enceinte lorsque cette pression atteint une valeur relative, dite pression de montée, comprise entre sensiblement 1,5 et 4 kPa.

De façon préférentielle, le moyen de sécurité à l'ouverture 7 est conçu pour que la pression de montée soit sensiblement égale à 3 kPa ± 0,5 kPa.

De façon encore plus avantageuse, la pression de montée est sensiblement égale à 3,3 kPa.

Avantageusement, le moyen de sécurité à l'ouverture 7 est conçu pour descendre vers sa position basse lorsque la pression à l'intérieur de l'enceinte atteint une valeur relative, dite pression de descente, est comprise entre sensiblement 1 et 4 kPa, et encore plus préférentiellement entre 1,5 et 4 kPa.

Ladite pression de descente est par ailleurs généralement sensiblement inférieure à la pression de montée.

De façon préférentielle, la pression de descente est sensiblement comprise entre 1,5 et 2 kPa, ou encore entre 1,5 et 2 kPa, la borne inférieure (1,5 kPa) étant exclue. La pression de descente pourra être également comprise entre 1,6 et 2 Kpa, ou entre 2 et 3 kPa, voire encore entre 3 et 4 kPa, sans que l'on sorte du cadre de l'invention.

Une pression de descente sensiblement égale à 2,5 kPa ± 0,5 kPa donne également de bons résultats.

De manière générale, on cherchera, dans le cadre de l'invention, à dimensionner et conformer le moyen de sécurité à l'ouverture 7, formé par exemple par la tige manométrique 7A, de façon à ce que la pression de descente, tout en étant inférieure à la pression de montée, soit la plus proche possible de la pression de montée.

Le moyen de sécurité à l'ouverture 7 sera également conçu pour que sa pression de descente soit la plus élevée possible, dans la limite des normes en vigueur, lesquelles prescrivent à ce jour un seuil de 4 kPa à ne pas dépasser pour la pression de descente. Le choix d'une pression de descente élevée, comprise par exemple entre 1,5 et 2 kPa, permet de pouvoir ouvrir plus rapidement le couvercle 2 de l'appareil de cuisson, en comparaison avec les autocuiseurs de l'art antérieur, dont la pression de descente n'excède pas en général 0,5 kPa.

En revanche, l'obtention d'une pression de descente élevée va généralement de pair avec un alourdissement de la tige manométrique 7A.

Cet alourdissement s'oppose bien évidemment à une montée rapide de la tige manométrique 7A vers sa position haute lors de la montée en pression de l'appareil, ce qui peut ralentir le cycle de cuisson.

C'est pourquoi on prévoit avantageusement, dans le cadre de l'invention, d'équiper l'appareil d'un moyen d'actionnement 10 de la tige de sécurité 7A, ledit moyen d'actionnement 10 étant agencé pour permettre de placer la tige 7A en position haute quelle que soit la valeur de la pression régnant dans l'enceinte.

De cette façon, c'est bien le moyen d'actionnement 10 lui-même qui, de façon mécanique, va forcer la tige 7A vers sa position haute, laquelle position haute est de préférence une position étanche grâce à la présence d'un joint d'étanchéité 12 contre lequel vient appuyer la tige 7A.

De manière avantageuse, le moyen de sécurité à l'ouverture 7 est par ailleurs relié fonctionnellement à un moyen de signalisation pour indiquer à l'utilisateur s'il lui est possible ou non d'ouvrir le couvercle 2.

De façon préférentielle, le moyen de signalisation est de caractère visuel et est avantageusement constitué par le corps de la tige manométrique 7A lui-même, qui, selon sa position, va apparaître ou non aux yeux de l'utilisateur par le biais d'une ouverture 7B agencé dans le carter de protection 7C englobant notamment le moyen de sécurité à l'ouverture 7.

Cette disposition permet à l'utilisateur de procéder sans délai au déverrouillage du couvercle 2, puisqu'il est informé de l'instant même où les conditions de pression régnant dans l'enceinte deviennent compatibles avec un déverrouillage sécurisé.

On va maintenant décrire le fonctionnement de l'appareil de cuisson conforme à l'invention.

En premier lieu, l'utilisateur place des aliments dans la cuve 1, c'est-à-dire directement dans celle-ci ou indirectement, par l'intermédiaire d'un panier amovible contenu dans la cuve 1.

L'utilisateur rapporte ensuite le couvercle 2 sur la cuve 1, tel que cela est illustré aux figures 9 et 10. A cet instant, les mâchoires 3B, 3C sont en position de déverrouillage, le moyen de décompression étant activé (c'est-à-dire que la tête d'actionnement 6A est maintenue en position haute par la rampe 9), la tige de sécurité à l'ouverture 7A étant en position basse.

L'utilisateur procède ensuite au verrouillage et à l'étanchéification du couvercle 2 sur la cuve 1, en tournant la poignée 3A dans le sens horaire selon une première course prédéterminée, ce qui a pour conséquence d'une part d'entraîner les mâchoires vers leur position de verrouillage, par translation radiale centripète, et d'autre part, grâce à une rampe 10 formant moyen d'actionnement, de pousser directement la tige manométrique 7A de sécurité vers sa position haute, tout en désactivant le moyen de décompression 6, qui devient alors un moyen de régulation de pression.

L'appareil de cuisson se trouve alors dans la situation représentée aux figures 3 et 4, c'est-à-dire dans une configuration de verrouillage sensiblement étanche. L'appareil peut ainsi monter en pression rapidement jusqu'à sa pression de fonctionnement comprise entre 4,5 et 30 kPa, pression qui est régulée par le moyen de régulation 6.

Dans le cas où l'utilisateur souhaite ouvrir le couvercle durant la cuisson, il lui suffit alors de tourner la poignée 3A dans le sens anti-horaire selon une deuxième course prédéterminée, ce qui aura pour conséquence, par l'intermédiaire de la rampe 9, de soulever la tête 6A et d'engendrer ainsi une fuite de vapeur provoquant une décompression de l'enceinte.

Tel que cela est représenté aux figures 5 et 6, la tige manométrique 7A, qui n'est à ce stade plus soutenue par la rampe 10, reste cependant en position haute tant que la pression régnant à l'intérieur de l'enceinte excède sensiblement sa pression de descente, comprise par exemple entre 1,5 et 2 kPa.

En position haute, la tige manométrique 7A coopère avec une nervure 11 de la pièce intermédiaire 3D de façon à empêcher le déverrouillage du couvercle 2 relativement à la cuve 1.

Puis, lorsque la pression à l'intérieur de l'enceinte est retombée en deçà de la pression de descente, la tige manométrique 7A retourne automatiquement vers sa position basse, autorisant ainsi le déverrouillage du couvercle.

L'opération d'ouverture du couvercle aura en définitive été extrêmement brève, grâce à la définition judicieuse du niveau de pression de fonctionnement de l'appareil en combinaison avec la pression de descente, ledit niveau de pression de fonctionnement autorisant également une cuisson rapide.

On notera enfin que l'invention n'est pas dirigée exclusivement vers un appareil doté d'un moyen de sécurité à l'ouverture, et qu'elle concerne en particulier un appareil de cuisson domestique sous pression comprenant :
- une cuve de cuisson 1 et un couvercle 2 destiné à être rapporté et verrouillé sur ladite cuve 1 pour former une enceinte de cuisson sensiblement étanche,
- un moyen de verrouillage / déverrouillage 3 du couvercle 2 relativement à la cuve 1,
- un moyen de régulation de pression 6, agencé pour maintenir la pression relative régnant dans l'enceinte à une valeur prédéterminée P_{f} sensiblement constante dite pression de fonctionnement,
- un moyen de décompression activable / désactivable 6, agencé pour autoriser, lorsqu'il est activé, une chute de la pression régnant dans l'enceinte,
caractérisé en ce que le moyen de régulation de pression 6 est conçu pour que la pression de fonctionnement P_{f} soit comprise dans une plage s'étendant sensiblement entre 4,5 et 19,9 kPa, indépendamment de la mise en oeuvre d'un moyen de sécurité à l'ouverture.

Il s'avère en effet que la plage 4,5-19,9 kPa, de même d'ailleurs que les plages 5-19,9 kPa ou 10-19,9 kPa, procure un excellent compromis entre le temps de cuisson et la rapidité d'ouverture du couvercle en cours de cuisson.

## Revendications

1. Appareil de cuisson domestique sous pression comprenant :
- une cuve de cuisson (1) et un couvercle (2) destiné à être rapporté et verrouillé sur ladite cuve (1) pour former une enceinte de cuisson sensiblement étanche,
- un moyen de verrouillage / déverrouillage (3) du couvercle (2) relativement à la cuve (1),
- un moyen de régulation de pression (6), agencé pour maintenir la pression relative régnant dans l'enceinte à une valeur prédéterminée (P_{f}) sensiblement constante, dite pression de fonctionnement, comprise dans une plage s'étendant sensiblement entre 4,5 et 19,9 kPa,
**caractérisé en ce qu'**il comprend d'une part un moyen de décompression activable / désactivable (6), agencé pour autoriser, lorsqu'il est activé, une chute de la pression régnant dans l'enceinte, et d'autre part un moyen de sécurité à l'ouverture (7) sensible à la pression et/ou à la température régnant dans l'enceinte.

2. Appareil selon la revendication 1 **caractérisé en ce que** la pression de fonctionnement (P_{f}) est sensiblement comprise entre 5 et 19,9 kPa.

3. Appareil selon la revendication 2 **caractérisé en ce que** la pression de fonctionnement (P_{f}) est sensiblement comprise entre 10 et 19,9 kPa.

4. Appareil selon l'une des revendications 1 à 3 **caractérisé en ce que** ledit moyen de sécurité à l'ouverture (7) est monté mobile entre une position basse, dans laquelle il autorise le verrouillage / déverrouillage du couvercle relativement à la cuve, et une position haute, dans laquelle il coopère avec le moyen de verrouillage / déverrouillage pour empêcher le déverrouillage du couvercle relativement à la cuve.

5. Appareil selon la revendication 4 **caractérisé en ce que** le moyen de sécurité à l'ouverture (7) est conçu pour être maintenu en position haute sous l'effet de la pression régnant dans l'enceinte lorsque cette pression atteint une valeur relative dite pression de montée comprise entre sensiblement 1,5 et 4 kPa.

6. Appareil selon la revendication 5 **caractérisé en ce que** la pression de montée est sensiblement égale à 3 kPa ± 0,5 kPa.

7. Appareil selon l'une des revendications 1 à 6 **caractérisé en ce qu'**il comprend un moyen d'actionnement (10) du moyen de sécurité à l'ouverture (7), ledit moyen d'actionnement (10) étant agencé pour permettre de placer le moyen de sécurité à l'ouverture (7) en position haute quelle que soit la valeur de la pression régnant dans l'enceinte.

8. Appareil selon l'une des revendications 1 à 7 **caractérisé en ce que** le moyen de sécurité à l'ouverture (7) est relié fonctionnellement à un moyen de signalisation pour indiquer à l'utilisateur s'il lui est possible ou non d'ouvrir le couvercle.

9. Appareil selon la revendication 8 **caractérisé en ce que** le moyen de signalisation est de caractère visuel.

## Claims

1. A household appliance for cooking under pressure, the appliance comprising:
- a cooking bowl (1) and a lid (2) for fitting and locking on the bowl (1) to form a substantially leaktight Cooking enclosure;
- means (3) for looking and unlocking the lid (2) relative to the bowl (1);
- pressure regulator means (6) arranged to maintain the relative pressure inside the enclosure at a predetermined value (P_{L}) that is substantially constant and referred to as the cooking pressure, said predetermined value (P_{f}) lying substantially in the range 4.5 kPa to 19.9 kPa;
the appliance being **characterized in that** it comprises firstly activatable and deactivatable decompression means (6) arranged, when activated, to allow the pressure that exists inside the enclosure to drop, and secondly opening safely means (7) responsive to the pressure and/or the temperature that exists inside the enclosure.

2. An appliance according Lo claim 1, **characterized in that** the choking pressure (P_{L}) lies substantially in the range 5 kPa to 19.9 kPa.

3. An appliance according to claim 2, **characterized in that** the cooking pressure (P_{f}) lies substantially in the range 10 kPa to 19.9 kPa.

4. An appliance according to any one of claims 1 to 3, **characterized in that** said opening safety means (7) is mounted to move between a low position in which it allows the lid to be locked and unlocked relative to to the bowl, and a high position in which it cooperates with the locking and unlocking means to prevent the lid being unlocked relative to the bowl.

5. An appliance according to claim 4, **characterized in that** the opening safety means (7) is designed to be maintained in the high position under the effect of the pressure that exists inside the enclosure once said pressure has reached a "rise" relative pressure value lying substantially in the range 1.5 kPa to 4 kPa.

6. An appliance according to claim 5, **characterized in that** the rise pressure is substantially equal to 3 kPa ± 0.5 kPa.

7. An appliance according to any one of claims 1 to 6, **characterized in that** it includes actuator means (10) for actuating the opening safety means (7), said actuator means (10) being arranged to enable the opining safety means (7) to be put in the high position regardless of the value of the pressure that exists inside the enclosure.

8. An appliance according to any one of claims 1 to 7, **characterised in that** the opening safety means (7) is functionally connected to signaling means to inform the user whether or not it is possible to open the lid.

9. An appliance according to claim 8, **characterized in that** the signaling means is of a visual nature.

## Patentansprüche

1. Haushaltsdruckgargerät, umfassend:
- einen Garbehälter (1) und einen Deckel (2), der dazu bestimmt ist, auf den Behälter (1) aufgesetzt und auf diesem verriegelt zu werden, um eine im Wesentlichen dichte Garkammer zu bilden,
- ein Verriegelungs-/Entriegelungsmiltel (3) zur Anbringung des Deckels (2) relativ zum Behälter (1),
- ein Mittel zur Druckregelung (6), das derart angeordnet isL, dass es den in der Kammer herrschenden relativen Druck auf einem im Wesentlichen konstanten vorbestimmten Wert (P_{f}), Betriebsdruck genannt, hält, der in einem Bereich im Wesentlichen zwischen 4,5 und 19,9 kPa liegt,
**dadurch gekennzeichnet, dass** es einerseits ein aktivierbares/deaktivierbares DruckminderungsmiLtel (6) aufweist, das eingerichtet ist, um, wenn es betätigt wird, einen Abfall des in der Garkammer herrschenden Drucks zu erlauben, und andererseits ein Sicherheitsmittel bei der Öffnung (7), das auf den Druck und/oder die Temperatur, die in der Kammer herrschen, reagiert.

2. Vorrichtung nach Anspruch 1, **dadurch gekennzeichnet, dass** der Betriebsdruck (P_{f}) im Wesentlichen zwischen 5 und 19,9 kPa liegL.

3. Vorrichtung nach Anspruch 2, **dadurch gekennzeichnet, dass** der Betriebsdruck (P_{f}) im Wesentlichen zwischen 10 und 19,9 kPa liegt.

4. Vorrichtung nach einem der Ansprüche 1 bis 3, **dadurch gekennzeichnet, dass** das Sicherhcitsmittel bei der Öffnung (7) zwischen einer unteren Position, in welcher es das Verriegeln/Entricgeln des Deckels in Bezug auf den Behälter gestatten, und einer oberen Position, in welcher es mit dem Verriegelungs- /Entriegelungsmittel zusammenwirkt, um das Entriegeln des Deckels in Bezug auf den Behälter zu verhindert, beweglich montiert ist.

5. Vorrichtung nach Anspruch 4, **dadurch gekennzeichnet, dass** das Sicherheitsmittel bei der Öffnung (7) derart ausgebildet isL, dass es unter der Einwirkung des in der Kammer herrschenden Drucks in der oberen Position gehalten wird, wenn dieser Druck einen relativen Wert, Anstiegsdruck genannt, zwischen im Wesentlichen 1,5 kPa und 4 kPa erreicht hat.

6. Vorrichtung nach Anspruch 5, **dadurch gekennzeichnet, dass** der Anstiegsdruck im Wesentlichen bleich 3 kPa ± 0,5 kPa beträgt.

7. Vorrichtung nach einem der Ansprüche 1 bis 6, **dadurch gekennzeichnet, dass** sie ein BetätigungsmiLLel (10) des Sicherheitsmittcls bei der Öffnung (7) umfassL, wobei dieses Betätigungsmittel (10) eingerichtet ist, um es unabhängig vom Wert des in der Kammer herrschenden Drucks zu erlauben, das Steherheilsmittel bei der Öffnung (7) in die obere Position zu bringen.

8. Vorrichtung nach einem der Ansprüche 1 bis 7, **dadurch gekennzeichnet, dass** das Sieherheitsmittel bei der Öffnung (7) funktional mit einem Meldemittel verbunden ist, um dem Benutzer anzuzeigen, ob er den Deckel öffnen kann oder nicht.

9. Vorrichtung nach Anspruch 8, **dadurch gekennzeichnet, dass** das Meldemittel optischer Art ist.
